# EUROPÄISCHE PATENTSCHRIFT

(11) **EP 2 591 841 B1**
(45) Veröffentlichungstag und Bekanntmachung des Hinweises auf die Patenterteilung: **23.09.2015**
(21) Anmeldenummer: 13154396.9
(22) Anmeldetag: 13.11.2010
(51) Int. Cl.: B01D 50/00, B01D 53/50, B01D 53/75, C10J 3/84

(54) **Anlage zur Abscheidung von sauren Komponenten, Staub und Teer aus heißen Gasen von Vergasungsanlagen**
Plant for separating acidic components, dust and tar from hot gases from gasification plant
Installation destinée à séparer les composants acides, la poussière et le goudron de gaz chauds dans des installations de gazage

(30) Priorität: 16.12.2009 DE 102009058656
(43) Veröffentlichungstag der Anmeldung: 15.05.2013
(62) Teilanmeldung aus: 10781615.9
(73) Patentinhaber: ThyssenKrupp Industrial Solutions AG, 45143 Essen (DE)
(72) Erfinder: Pavone, Dr., Domenico, 44797 Bochum (DE); Abraham, Ralf, 59192 Bergkamen (DE)
(74) Vertreter: Kutzenberger Wolff & Partner

(56) Entgegenhaltungen:
- EP-A1- 1 762 292
- FR-A1- 2 515 061
- GB-A- 1 236 017
- JP-A- 2000 303 078
- KR-A- 20040 090 182

## Beschreibung

Bei der Vergasung fossiler Brennstoffe, wie beispielsweise Stein- oder Braunkohle, Biomassen, Raffinerierückständen reagiert das enthaltene Chlor oder Schwefel zu sauren Gasen, was zu erosiven oder korrosiven Problemen bei den nachgeschalteten Anlagekomponeten führt. Bei der Vergasung von Biomassen fallen zudem noch beträchtliche Mengen an Teeren an, die es zu entfernen gilt, da die Teerkondensate ebenfalls in nachgeschalteten Anlagen zu erheblichen Problemen führen können. Aus der EP 1 870 444 A2 ist ein Reinigungsverfahren von Gasen aus einem Holzvergaser bekannt, das Filterkerzen einsetzt und dem Produktgas mehr Zeit für chemische Reaktionen vor den Filterkerzen lässt. Eine Zyklonabscheidung ist dort nicht vorgesehen.

Eine mögliche Abscheidung von sauren Schadgasen kann auch dadurch erfolgen, dass nasse Waschverfahren eingesetzt werden, was aber den Nachteil hat, dass die Gase stark abgekühlt werden müssen. Eine Teerabscheidung wird als sogenannte katalytische Abscheidung in separaten katalytischen Teerabscheidern durchgeführt, wobei ein derartiger Apparat in der Regel der H₂S-Abscheidung und der Entstaubung nachgeschaltet ist. Wird ein entsprechender Katalysator dem Filter vorgeschaltet, so ist es notwendig, dass das Synthesegas aufgrund der Wärmeverluste wieder auf die Betriebstemperatur zwischen 800°C und 1000°C aufgeheizt werden muss, was zu hohen Wirkungsgradverlusten und zu einem entsprechend hohen technischen Aufwand führt.

Aufgabe der Erfindung ist es, ein wirtschaftliches Verfahren mit einer entsprechenden Anlage zu schaffen, die eine sichere Abtrennung von sauren Verbindungen HF, HCl, H₂S, Staub und Teer in einem möglichst hohen Temperaturbereich ermöglicht.

Zur Lösung der Aufgabe sieht die Erfindung eine Anlage zur Abscheidung von sauren Komponenten, Staub und Teer aus heißen Abgasen von Vergasungsanlagen vor, bei der ein Zyklonabscheider und ein Kerzenfilter innerhalb eines Gefäßes in Schwerkraftrichtung übereinander vorgesehen sind, wobei das Zentralrohr des Zyklonabscheiders in den mit Filterkerzen bestückten Filterraum geführt ist und die sich dadurch auszeichnet, dass die Trennwand zwischen Zyklonabscheider und Filterraum als trichterförmiger Boden ausgebildet ist, der vom Zentralrohr des Zyklonabscheiders durchsetzt ist, wobei im Zentralrohr ein im Durchmesser kleineres Fallrohr für Feinstaub positioniert ist mit Zuführelementen für den Feinstaub vom Trichterboden in das Fallrohr. Das Fallrohr kann mit einem Staubaustrag mit Schleusen zu einem Staubsammler münden.

Die Zuordnung des Zyklonabscheiders und der Kerzenfilter innerhalb eines Gerätes mit der erfindungsgemäßen Positionierung führt zu geringen Strömungsverlusten bei gleichzeitig hoher Effizienz.

An dieser Stelle sei bemerkt, dass für sich gesehen Kombinationsgeräte aus Filter und Zyklon bekannt sind, z.B. aus dem deutschen Gebrauchsmuster 1 879 283, wobei dort besonders auf die Feinstaubaustragung keine Rücksicht genommen wird. Kleinbauende Filter entsprechender Bauweise zeigen auch die DE 26 22 938 B, DE 32 30 709 A oder DE 34 22 592 A, um nur einige Beispiele zu nennen. Abgewandelte Ausgestaltungen zeigen die US 2 941 621 oder die WO83/03556. Kombinationen sind auch aus der JP 2000303078 und der KR 2004 0090182 bekannt.

Dadurch, dass die Trennwand zwischen Zyklonabscheider und Filterraum als trichterförmiger Boden ausgebildet ist, der vom Zentralrohr des Zyklonabscheiders durchsetzt ist, wobei im Zentralrohr ein im Durchmesser kleineres Fallrohr für Feinstaub positioniert ist, mit Zuführelementen für den Feinstaub vom Trichterboden in das Fallrohr, ist gewährleistet, dass der Staub abgeführt wird.

Diese spezielle Gestaltung einer erfindungsgemäßen Anlage zeichnet sich zusätzlich dadurch aus, dass die Zuführelemente als speichenförmig angeordnete Rohrstutzen zwischen Kopfbereich des Fallrohres und dem Zentralrohr im Tiefpunkt des Trichterbodens ausgebildet sind.

Die Erfindung sieht auch vor, dass die Filterkerzen mit einer katalytischen Beschichtung und/oder einer katalytischen Füllung ausgerüstet sind und/oder dass jede Filterkerze mit einem katalytisch aktiven Sicherheitsfilter ausgerüstet ist.

Die Erfindung sieht auch unabhängig von der Apparatgestaltung vor, dass die Filterkerzen mit einer katalytischen Beschichtung und/oder einer katalytischen Füllung ausgerüstet sind.

Weitere Merkmale, Einzelheiten und Vorteile der Erfindung ergeben sich aufgrund der nachfolgenden Beschreibung sowie anhand der Zeichnung, diese zeigt in
- Fig. 1: ein Prinzipschaltbild einer Anlage zur Durchführung des erfindungsgemäßen Verfahrens,
- Fig. 2: in vereinfachter Schnittdarstellung eine Apparateausführung nach der Erfindung sowie in
- Fig. 3: eine leicht vergrößerte Teilaufsicht auf das Zentralrohr gemäß Pfeil III in Fig. 2.

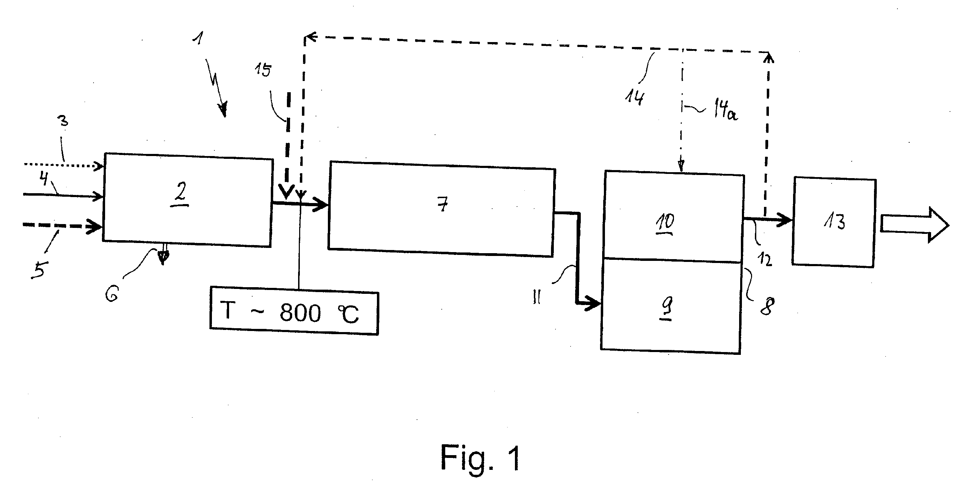

Die in Fig. 1 allgemein mit 1 bezeichnete Anlage ist dort als Prinzipschaltbild dargestellt. Dabei werden dort einem Vergaser 2 Brennstoff (punktierter Pfeil 3), Sauerstoff (durchgezogener Pfeil 4) und ggf. Additive (gestrichelter Pfeil 5) zugeführt. Der Schlackeabzug ist mit 6 bezeichnet. Dem Vergaser 2 folgt eine Entschwefelung 7 und nachfolgend der Apparat 8, in dem ein Zyklon 9 und ein Kerzenfilterbereich 10 zusammengefasst sind.

Die Gaszufuhr in den Zyklon 9 ist mit einem Pfeil 11 bezeichnet, der Nutzgasauslass hinter dem Kerzenfilter 10 mit einem Pfeil 12. Das Nutzgas, allgemein mit 13 bezeichnet, wird dann einer weiteren Verarbeitung zugeführt.

Eine Quenchgasrückführung aus dem Strom 12 in einem Bereich vor der Entschwefelung 7 ist mit einem gestrichelten Pfeil 14 wiedergegeben. In diesem Bereich vor der Entschwefelung kann auch ein Additiv zugeführt werden, was mit einem gestrichelten Pfeil 15 angedeutet ist.

Erkennbar kann beispielsweise die Abscheidung saurer Gaskomponenten, z.B. eine H₂S-Abscheidung vor der Entstaubung mittels Additivzugabe (Vergaser und/oder mit Quenchgas) erfolgen. Eine Teerabscheidung vor der Entstaubung durch Additive ist ebenfalls möglich, wobei die Vorababscheidung dieser Additive und des Staubes im Zyklon und eine Feinstaubabscheidung im Kerzenfilter erfolgt.

Möglich ist auch die Restabscheidung der Teere an und/oder innerhalb der Kerzenfilter, wobei den Kerzenfiltern am Austritt ein Sicherheitsfilter, z.B. aus Schaumkeramik, nachgeschaltet sein kann. Diese Sicherheitsfilter können auch katalytisch aktiv sein. Das Quenchgas, beispielsweise angedeutet durch einen Teilstrom 14a, kann zur Abreinigung der Filterkerzen verwendet werden, wie nachfolgend noch dargestellt.

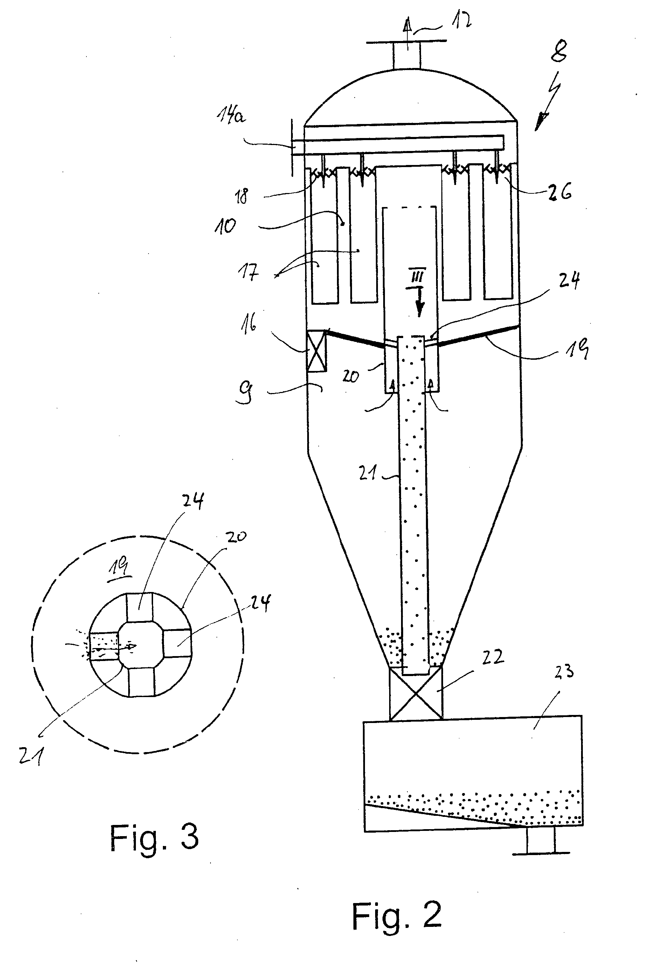

In Fig. 2 ist vereinfacht der Apparat 8 im Schnitt dargestellt, der aus einer Kombination des Zyklons 9 mit dem Kerzenfilter 10 gebildet ist. Dem Zyklon 9 werden über einen Zykloneintritt 16 die mit Partikeln beladenen Gase zugeführt, wobei aufgrund der unterschiedlichen Druckverhältnisse die Mehrzahl der Partikel nach unten abgesetzt wird. Die so vorgereinigten Gase strömen im Zentralrohr des Zyklonabscheiders 9 nach oben in den Kerzenfilterbereich 10 und werden mittels der mit 17 bezeichneten Kerzenfilter abgereinigt. Das so gereinigte Gas durchströmt noch am Kopf der Kerzenfilter befindliche Sicherheitsfilter, mit 18 bezeichnet, um dann gemäß Pfeil 12 den Apparat 8 zu verlassen.

Werden die Kerzenfilter z.B. mittels rückgeführten Quenchgases über die Leitung 14a abgereinigt, fällt der an den Filter haftende Staub auf den schräg nach unten geneigten Trennboden 19 zwischen Zyklon 9 und Kerzenfilterbereich 10, wobei das Zentralrohr 20 des Zyklons einen inneren Einbau im Bodenbereich 19 aufweist, der in Fig. 3 etwas vergrößert dargestellt ist.

Speichenangeordnete Feinstaubaustragsrohre 24 führen vom Boden 19 in das zentrische Abführrohr 21, welches den Zyklon 9 durchsetzt und unten in einem Staubaustrag 22 endet, wobei dort über entsprechende Schleusen der Staub einem Staubsammler 23 zugeführt wird.

Natürlich sind die beschriebenen Ausführungsbeispiele der Erfindung noch in vielfacher Hinsicht abzuändern, ohne den Grundgedanken zu verlassen, so stellen die Fig. 2 und 3 lediglich stark vereinfacht die entsprechenden Apparate 8 bzw. 8a dar, welche für die Erfindung wesentlich als Kombiabscheider gestaltet sind.

## Patentansprüche

1. Anlage, insbesondere zur Durchführung eines Verfahrens zur Abscheidung von sauren Komponenten, Staub und Teer aus heißen Gasen von Vergasungsanlagen, wobei ein Zyklonabscheider (9) und ein Kerzenfilter (10) innerhalb eines Gefäßes (8) in Schwerkraftrichtung übereinander vorgesehen sind, wobei das Zentralrohr (20) des Zyklonabscheiders (9) in den mit Filterkerzen (17) bestückten Filterraum (10) geführt ist,
**dadurch gekennzeichnet,**
**dass** die Trennwand (19) zwischen Zyklonabscheider (9) und Filterraum (10) als trichterförmiger Boden ausgebildet ist, der vom Zentralrohr (20) des Zyklonabscheiders (9) durchsetzt ist, wobei im Zentralrohr (20) ein im Durchmesser kleineres Fallrohr (21) für Feinstaub positioniert ist mit Zuführelementen (24) für den Feinstaub vom Trichterboden (19) in das Fallrohr (21).

2. Anlage nach Anspruch 1,
**dadurch gekennzeichnet,**
**dass** die Zuführelemente als speichenförmig angeordnete Rohrstutzen (24) zwischen Kopfbereich des Fallrohres (21) und dem Zentralrohr (20) im Tiefpunkt des Trichterbodens (19) ausgebildet sind.

3. Anlage nach Anspruch 1 oder 2,
**dadurch gekennzeichnet,**
**dass** die Filterkerzen (17,17a) mit einer katalytischen Beschichtung und/oder einer katalytischen Füllung ausgerüstet sind.

4. Anlage nach Anspruch 3,
**dadurch gekennzeichnet,**
**dass** jede Filterkerze (17,17a) mit einem katalytisch aktiven Sicherheitsfilter (26) ausgerüstet ist.

## Claims

1. Installation, in particular for carrying out a method for the separation of acidic components, dust and tar from hot gases of gasification installations, wherein a cyclone separator (9) and a cartridge filter (10) are provided within a vessel (8) so as to be situated one above the other in the direction of gravitational force, wherein the central pipe (20) of the cyclone separator (9) is guided into the filter space (10) which is equipped with filter cartridges (17),
**characterized**
**in that** the partition (19) between cyclone separator (9) and filter space (10) is in the form of a funnel-shaped base through which the central pipe (20) of the cyclone separator (9) extends, wherein, in the central pipe (20), there is positioned a relatively small-diameter downpipe (21) for fine dust, having feed elements (24) for feeding the fine dust from the funnel base (19) into the downpipe (21).

2. Installation according to Claim 1,
**characterized**
**in that** the feed elements are in the form of pipe stubs (24), which are arranged in the manner of spokes, between a head region of the downpipe (21) and the central pipe (20) at the low point of the funnel base (19).

3. Installation according to Claim 1 or 2,
**characterized**
**in that** the filter cartridges (17, 17a) are equipped with a catalytic coating and/or a catalytic filling.

4. Installation according to Claim 3,
**characterized**
**in that** each filter cartridge (17, 17a) is equipped with a catalytically active safety filter (26).

## Revendications

1. Installation destinée à mettre en oeuvre un procédé de séparation de composants acides, de poussière et de goudrons de gaz chauds provenant d'installations de gazéification, un séparateur à cyclone (9) et un filtre à bougie (10) étant prévus l'un au-dessus de l'autre dans la direction de la force de pesanteur à l'intérieur d'un récipient (8), le tube central (20) du séparateur à cyclone (9) étant guidé dans l'espace de filtre (10) garni des bougies de filtre (17),
**caractérisée en ce que**
la paroi de séparation (19) entre le séparateur à cyclone (9) et l'espace de filtre (10) est réalisée sous forme de fond en forme d'entonnoir qui est traversé par le tube central (20) du séparateur à cyclone (9), un tube de descente (21) de plus petit diamètre étant positionné dans le tube central (20) pour la poussière fine avec des éléments d'acheminement (24) pour la poussière fine depuis le fond de l'entonnoir (19) jusque dans le tube de descente (21).

2. Installation selon la revendication 1,
**caractérisée en ce que**
les éléments d'acheminement sont réalisés sous forme de tubulures (24) disposées sous forme de rayons entre la région de tête du tube de descente (21) et le tube central (20) dans le point le plus profond du fond de l'entonnoir (19).

3. Installation selon la revendication 1 ou 2,
**caractérisée en ce que**
les bougies de filtre (17, 17a) sont munies d'un revêtement catalytique et/ou d'une charge de remplissage catalytique.

4. Installation selon la revendication 3,
**caractérisée en ce que**
chaque bougie de filtre (17, 17a) est munie d'un filtre de sécurité catalytiquement actif (26).
